# EUROPEAN PATENT SPECIFICATION

(11) **EP 1 786 964 B1**
(45) Date of publication and mention of the grant of the patent: **20.08.2008**
(21) Application number: 04769307.2
(22) Date of filing: 07.09.2004
(51) Int. Cl.: D04B 21/16, A01F 15/00

(54) **NETTING MATERIAL WITH REFLECTIVE OR LUMINESCENT MARKER**
NETZMATERIAL MIT REFLEKTIERENDEM ODER LUMINESZIERENDEM MARKIERSTOFF
MATIERE DE FILET COMPORTANT UN MARQUEUR REFLECHISSANT OU LUMINESCENT

(43) Date of publication of application: 23.05.2007
(73) Proprietor: Tama Plastic Industry, 19236 Mishmar Ha'Emek (IL)
(72) Inventor: LIN, Ronen, 19236 Mishmar Ha'Emek (IL); LIOR, Tsafrir, 19236 Mishmar Ha'Emek (IL); PELED, Ohad, 19236 Mishmar Ha'Emek (IL)
(74) Representative: Grey, Ian Michael
(86) International application number: PCT/IB2004/002908
(87) International publication number: WO 2006/027637

(56) References cited:
- EP-A- 0 497 507
- EP-A- 0 578 353
- WO-A-01/16223
- WO-A-96/10107
- DE-A1- 3 722 411
- DE-U1- 7 808 280
- US-A- 4 570 789
- US-B1- 6 521 551

## Description

The present invention relates to the field of packaging, and more particularly, to netting for baling agricultural produce.

The use of balers for baling agricultural crops into round (cylindrical) bales has become increasingly common in recent years, replacing the old system of baling square bales which were secured by different types of twine or metal wire. The first round-balers also used various types of twines to secure the bale, however, over the years other types of netting have been used. The use of knitted Raschel nets has become more and more common. Raschel netting is a knitted netting and is made from polymeric material. Raschel netting includes a plurality of equally spaced longitudinal ribbons known as "franzes" and a plurality of intervening zigzag ribbons known as "schusses".

Information regarding Raschel netting, including details on its production, materials, and other aspects, can be found in US Patent No. 4569439, US Patent No. 5104714 and US Patent No. 6521551. US Patent No. 4569439 to Freye et al describes netting for wrapping a round bale of agricultural blade crops. The Freye netting eliminates prior measures for fastening of the wrapping which were previously necessary. US Patent No. 5104714 to Lieber et al describes an elastic netting and a method for making the same, wherein linear low density polyethylene ribbons are knitted into a Raschel net. US Patent No. 6521551 to Mass et al describes a knitted netting that includes longitudinal polyolefin ribbons and lateral polyolefin ribbons knitted with the longitudinal polyolefin ribbons to form knitted netting. The lateral polyolefin ribbons of the knitted netting have an actual schuss length more than 110% of a calculated schuss length for the knitted netting, which prevents transverse shrinkage of the netting.

Nets for use in round baling machines are normally supplied in rolls of various diameters, typically up to 30cm. The net is used to wrap crops with the required number of wraps around the circumference of the bale, typically two to four times. The number of bales that can be wrapped by one roll of net varies, and is determined by the length of net on the roll, the diameter of the wrapped bales, and the type of crop. Typically, about 12 linear meters of net are required to wrap one bale. Different balers and different conditions require different measurements of net, but generally, a standard roll of net will wrap 150-300 bales.

One limitation with balers and net wrap is that only a limited amount of netting can be loaded into the designated compartment on the baler. As a result, the operator must reload the baler with a new roll of netting every time a roll is exhausted. Ideally, an operator should receive a warning well in advance, to avoid a situation where the remaining net will not be sufficient to wrap the crop being baled. In such a situation, the bale may leave the baler unwrapped or wrapped insufficiently, such that the bale may break apart and the crop be wasted.

Some balers are equipped with an electronic metering device that measures the amount of net applied to the bale. The metering device includes an electronic sensor that is associated with a free turning roller, over which the net is passed enroute to the bale. The sensing device is calibrated to give an approximation of the amount of the net that passes over it, in order to calculate when to stop feeding the net into the baler, i.e. depending upon how much net is required per bale (number of net layers on the bale). Thus the device is used as an indicator of the amount of net applied, and it can also indicate the total amount of net that has been passed over the free-turning roller. However, since this free-turning roller is exposed to the weather, and is generally dirty and/or includes debris in its bearing that can impede its free-turning ability, the existing metering may not be very reliable. Thus, the bale operator is not automatically warned that the end of the roll is approaching. Instead, the bale operator can only estimate or speculate when the end of the roll is near. Therefore, a visual indicator is still necessary.

In addition, the electronic metering is not very accurate since the length of net on each roll and the length of net used to wrap a single bale often vary. This is because the amount of material on a roll can deviate slightly from the stated manufacturer's specifications, and because the diameter of the bale itself can vary from bale to bale, requiring more or less netting than anticipated. When relying on an electronic metering device, the operator still must visually verify the quantity of net remaining for wrapping.

In light of the above problems, the market has demanded that the operator be visually warned when the roll of net is nearly exhausted. Such a solution would allow the operator to replace the exhausted roll in time, and avoid the danger of wasting crop.

Some solutions have been developed, all based on the principle of a variation in the color of the net towards the end of roll.

However, the existing roll-end markers are useful only in daylight conditions. They cannot meet the requirements of baling during reduced lighting conditions, e.g., the evening or nighttime, as they are typically difficult to see in low light situations. Night baling is often done in areas with hot, dry weather, in order to ensure the presence of a minimum required percentage of humidity in the crop being baled. Also, in rainy areas, farmers may bale their crops around the clock in an attempt to bale all the available crop before expected showers that would render baling impossible.

An additional problem encountered when baling at night, is that as the farmer works through the field, the bales made earlier become invisible and difficult to locate in order to bring them in to cover.

Heretofore, a satisfactory solution to the problems has not been proposed. Accordingly, described below and in the appended claims is netting incorporating markers suitable for enhancing visibility of wrapped bales in low light situations, as well as for indicating an approaching roll end when used in balers or other wrapping devices.

It is known from EP 0578353 A1 to provide a netting comprising knitted longitudinal franze ribbons and interconnecting transverse schuss ribbons that zigzag laterally between the adjacent longitudinal franze ribbons and form a series of triangular openings.

A netting according to the present invention is characterised by at least one reflective or luminescent indicator strip that is threaded or knitted into the netting so as to extend over at least a part of the length of the netting adjacent to at least one of the longitudinal franze ribbons, at least one of the interconnecting zigzag schuss ribbons, or both.

The reflective or luminescent strip makes the netting visible in low light or reduced light situations, and in certain embodiments extends the entire length of the netting, or marks the roll end, or both, in a manner visible in low light situations. The strip reflects a source of light even from a distance and even at a sharp angle, or alternatively emits light itself, depending on the specific embodiment. The reflective or luminescent strip may be incorporated into the net in addition to and optionally alongside colored roll-end markers that are easily visible in daylight.

According to another aspect, there is provided a round bale wrapped about its circumference with the netting according to the invention.

In further aspects of the invention, there is provided a method of wrapping a bale of agricultural produce in a baler, according to claim 20 and, a method of providing a reflective netting according to claim 21.

Embodiments of the invention will now be described, by way of example only, and with reference to the accompanying drawings, in which:-
Figure 1 illustrates an isometric view of a first embodiment of the present invention;
Figure 2 illustrates in detail, one option for forming loops in the longitudinal franzes of Raschel netting:
Figure 3 illustrates a top view of a first embodiment of the present invention;
Figures 4 and 5 illustrate a second embodiment of the present invention, including a partially unrolled Raschel netting material with an added reflective strip alongside a longitudinal franze;
Figure 6 illustrates a third embodiment of the present invention including reflective strips incorporated into the netting material alongside both the longitudinal franzes and zigzag schusses;
Figure 7 is a photograph of the netting according to the third embodiment of the present invention taken with a flash;
Figure 8 is a nighttime photograph of distant bales wrapped in the claimed netting material, where a reflective strip is used in a zigzag fashion; and
Figure 9 is a photograph of the netting according to the third embodiment of the present invention taken without the use of a flash.

The present invention utilizes at least one reflective or luminescent strip which is incorporated into Raschel netting material, used to bale crops Raschel knitted netting is known from U.S. Patent Nos. 5,104,714 and 6,521,551.

In the embodiments described herein, the reflective or luminescent strip is added to the net alongside a least one of the longitudinal ribbons or at least one of the substantially transverse or lateral ribbons or both. The longitudinal and substantially lateral ribbons are respectively referred to as franzes and schusses.

In other embodiments described hereinafter, the reflective strips can extend the entire length of the netting or can extend for a predetermined part of the netting on a roll. Additionally, the reflective or luminescent strips may themselves have a predetermined color that is visible during the day and/or the night.

Because the strip tends to twist while being knitted into the roll of net and while the net is being used, a preferred type of strip is reflective or luminescent on both faces.

Depending on the specific embodiment, the reflective/luminescent strip can be incorporated into the net for a predetermined length, providing a warning for the last 100 linear meters of net, an amount sufficient for wrapping about 8 bales, or any other length that could be desired.

Since a bale itself cannot usually be seen at night unless the operator drives by it, at least one reflective/luminescent marker may be inserted along the entire length of the net in order to increase low- or reduced- light visibility of every bale that may be on a field. For example, reflective/luminescent markers can be located adjacent to the lateral side(s) of the netting, adjacent to the centre, or any location.

In a test performed by applicants, it was found that when a tractor's lights fall on a bale having a reflective strip, the bale can be seen even from a distance of 50 metres, and in some conditions even from a distance of 100 metres. In such conditions, the operator may notice the bale even if it is across a field.

Alternatively, netting can be provided with at least one reflective/luminescent marker along the entire length of the net, with a second reflective/luminescent marker only at the end of the net serving as a roll-end marker.

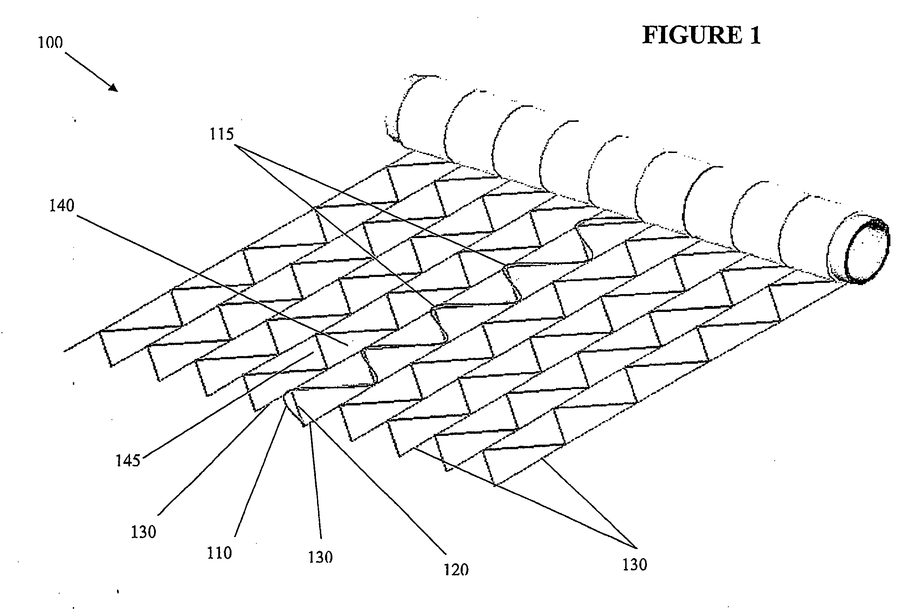

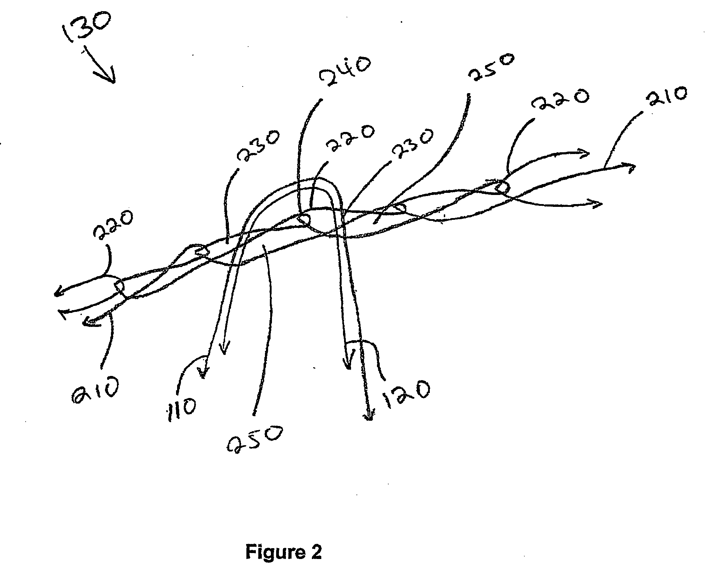

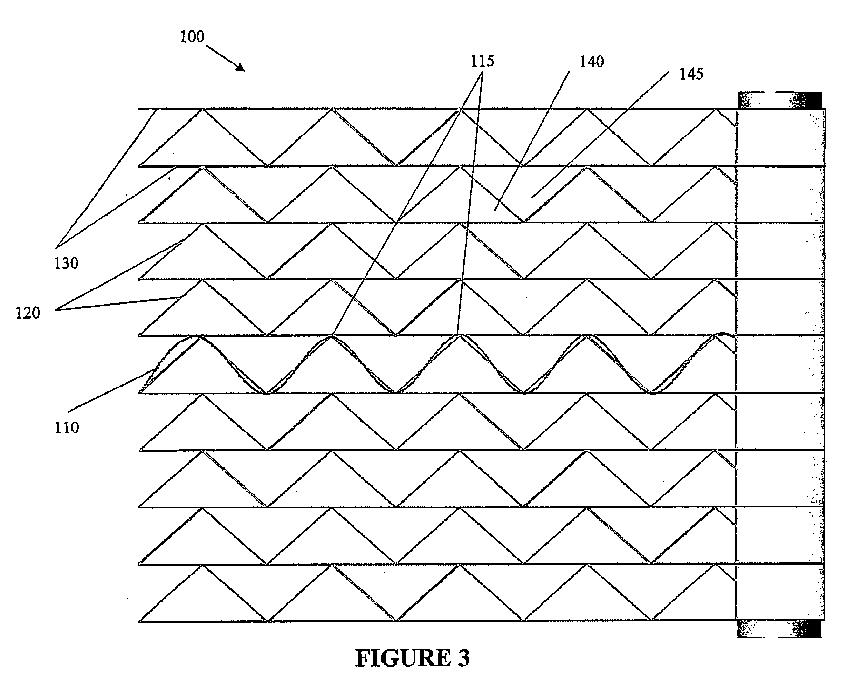

The invention will now be described with reference to the drawing figures. Figures 1 and 3 illustrate a first embodiment of the present invention in isometric and top views, respectively. Figures 1 and 3 show a partially unrolled Raschel netting material 100, in which a reflective strip 110 has been added to the netting 100. In this embodiment, the reflective strip 110 is inserted into the net adjacent to one of the zigzag schusses 120. The longitudinal franzes 130 are shown. The reflective strip 110 is threaded into the netting material such that at its apexes 115, it only passes through the apertures 140, 145 defined by the schusses and franzes, merely passing around the franze 130 at that point. Alternatively, the reflective strip 110 is threaded or knitted into the netting material 100 in such a manner that it passes through apertures 230, 250 (described below in connection with Figure 2) which are an integral part of the longitudinal franzes 130. Although Figures 1 and 3 illustrate the use of a single reflective strip 110, more than one reflective strip, at any desired position across the netting can be used.

Figure 2 illustrates in more detail, how the loops 230, 250 in the longitudinal franzes 130 of Raschel netting 100 are formed. A single strand of material 210 is used to form the entire franze. Since only a segment is shown in Figure 2, each end of the segment is shown as terminating in a single strand 210 and in a loop 220 from an adjacent segment, but these loops 220 occur at regular intervals throughout the length of the franze 130, and create links 240. These links 240 separate adjacent apertures 230, and provide a secure location through which to loop schusses 120, preventing the schusses from sliding along the franzes 130. In this embodiment, the schuss 120 passes through the apertures 230. In a similar manner, the reflective strip 110 may be secured to the franzes 130. As can be seen, it would also be possible to utilize apertures 250 to secure the schuss 120 or reflective strip 110.

Still referring to Figures 1-3, since the purpose of using the reflective strip 110 is precisely for that reason, that is, for reflecting light, the strength of the reflective strip is not important if it is included in the netting material 100 in an accessory capacity. Further, if included alongside schusses 120, the strength is even less important, since most internal stresses in the netting material are experienced as tension in the longitudinal franzes 130.

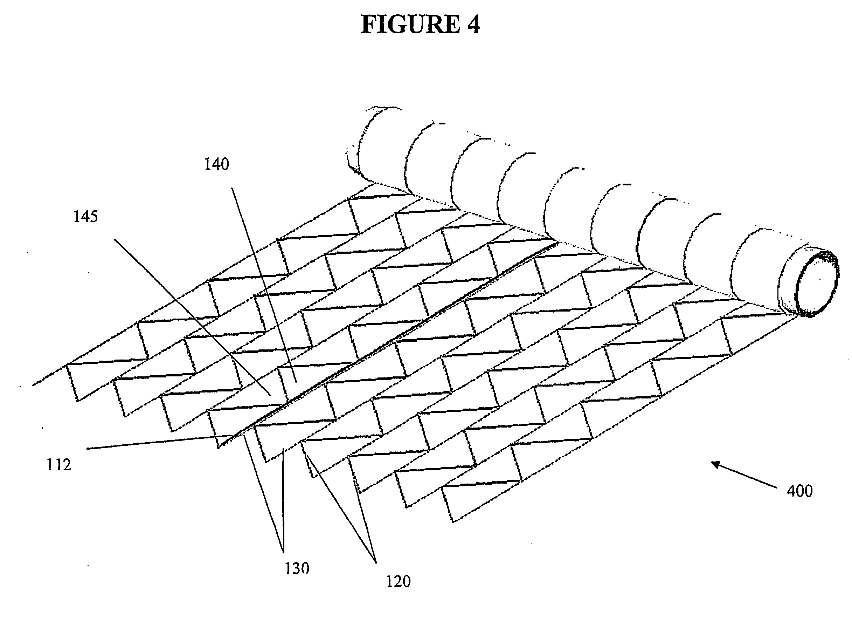

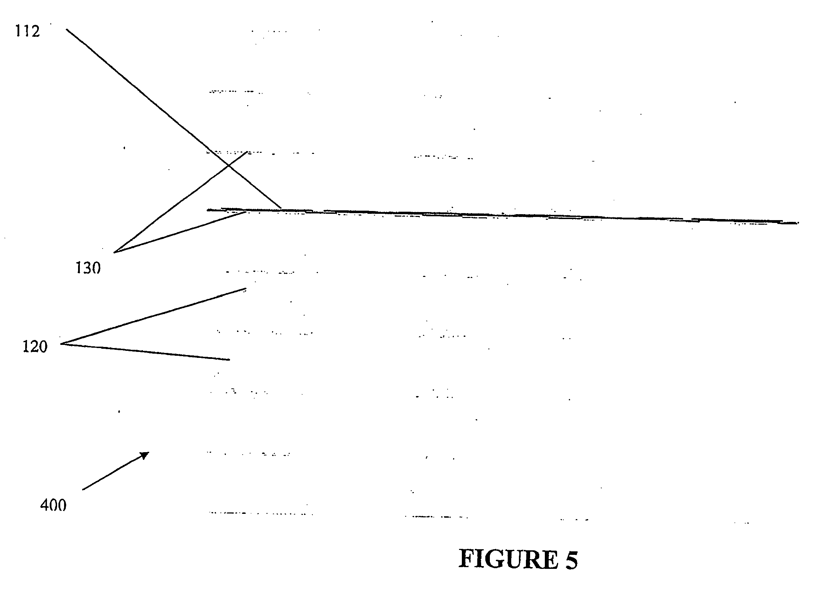

Figures 4 and 5 illustrate a second embodiment of the present invention. As shown, a partially unrolled Raschel netting material 400, includes an added reflective strip 112 alongside a longitudinal franze 130. The reflective strip 112 in this embodiment may be threaded along and around the franze 130 through apertures 140 and 145, or may be threaded through or knitted into the apertures 230 or 250 during the manufacture of the net. As with the embodiments of Figures 1-3, more than one franze ribbon may be replaced and/or supplemented with a reflective strip.

In both first and second embodiments illustrated in Figures 1-3 and 4-5, as well as in the below-described embodiments, the reflective strip 110 or 112 tends to twist as it runs the length of the netting material 100, 400. As such, it is often preferable to incorporate a reflective material that has reflective surfaces on both sides (if the reflective strip is in the form of a flat ribbon), or all sides (if the reflective strip is in the form of a string, rope or the like).

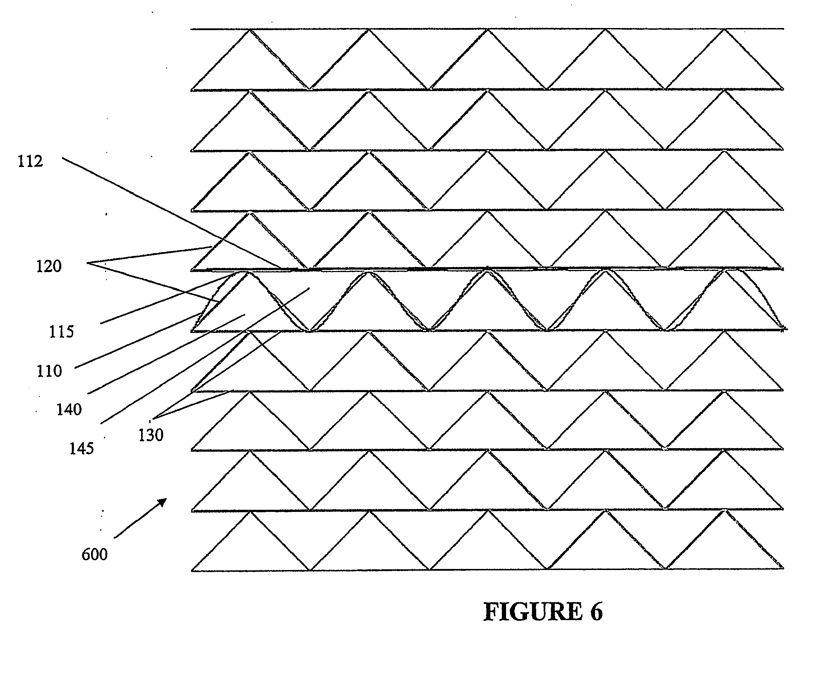

Figure 6 illustrates a third embodiment of the present invention in which reflective strips 110 and 112 have been incorporated into the netting material 600 alongside both the longitudinal franzes 130 and zigzag schusses 120. The manners in which the reflective strips 110 and 112 may be secured to the netting material 600 are the same as described in the first and second embodiments, respectively.

However, it is not necessary for both the schuss reflective strip 110 and the franze reflective strip 112 to be inserted into the netting material in the same manner. For example, one reflective strip 110 or 112 can be inserted by threading into already manufactured net 600, and the other reflective strip 112 can be inserted by knitting directly into the netting material 600.

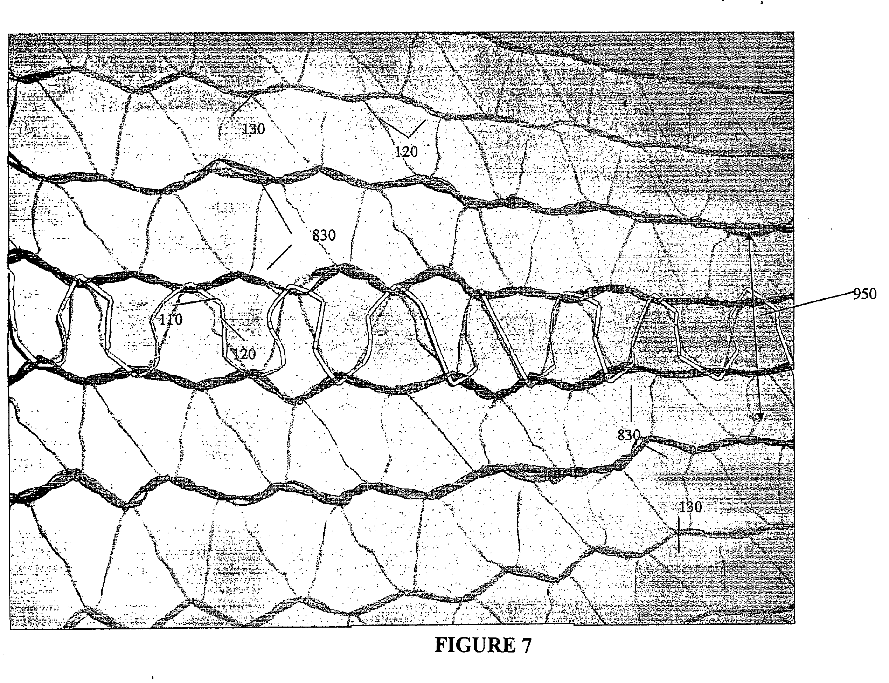

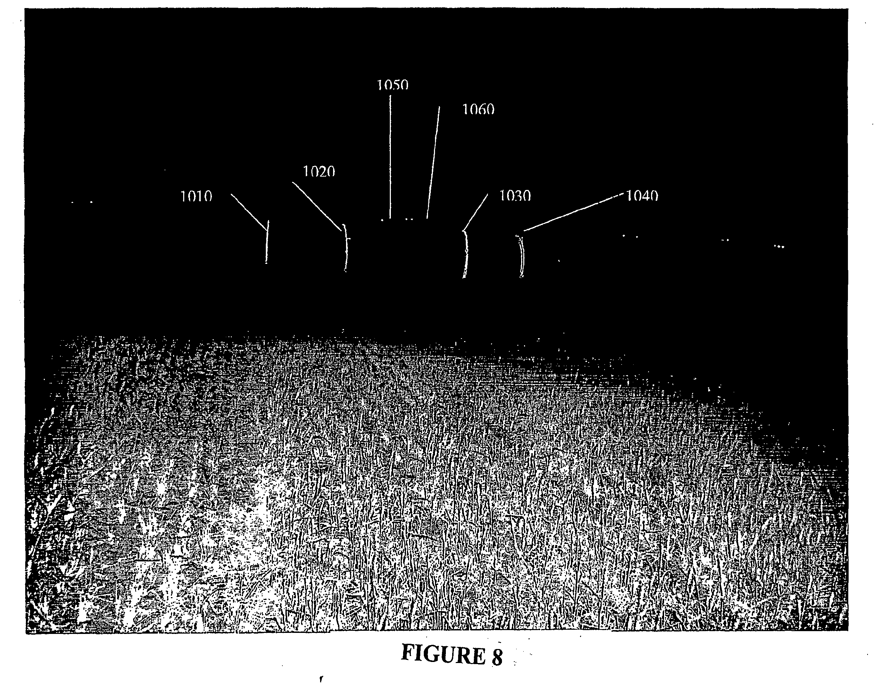

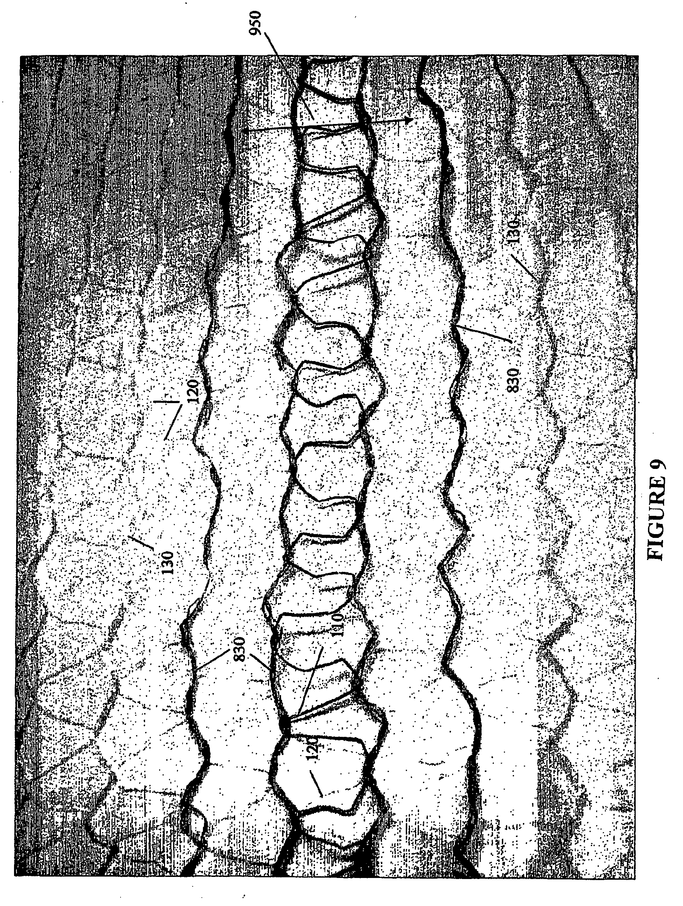

Figure 7 is a photograph of the netting 860 according to the third embodiment of the present invention taken with a flash. In this embodiment, the reflective strip 110 is included adjacent to the standard schuss 120, as in the first embodiment shown in Figures 1 and 3. In this version of the netting material 860, four coloured franzes 830 and one reflective strip 110 are provided. As shown in Figures 8 and 9, these indicator sections 850, 950 are centrally located relative to the width of the net 860, however this placement is not required, and the indicator sections 850, 860, may be placed anywhere; near one edge or along both edges, for example.

Figure 8 is a nighttime photograph of distant bales wrapped in the claimed netting material, where a reflective strip 110 is used in a zigzag fashion, as shown in Figures 1, 3 and 7. As seen in this photograph, which was taken using a camera flash, the nearest bales 1010, 1020, 1030 and 1040 are easily located due to the bright reflections experienced from the reflective strip 110. However, one can also see bales further from the photographer 1050 and 1060, which although twice as far from the photographer, still reflect enough light that they are visible, although the reflections are somewhat more dim.

Figure 9 is a photograph of the netting 860 according to the third embodiment of the present invention taken without use of a flash. As with the netting 860 in Figure 7, the reflective strip 110 is included adjacent to the standard schuss 120, also as in the first embodiment shown in Figures 1 and 3. In this version of the netting material 860, four coloured franzes 830 and one reflective strip 110 are provided. In comparison with Figure 7, a photograph of the same piece of netting but with use of a flash, the need for a secondary indicator (such as coloured franzes 830) in daylight is easily seen. The photograph of Figure 9 (without a flash), does not show great contrast between the reflective strip 110 and the rest of the netting material 860. With a flash (Figure 7), however the distinction is clear. Accordingly, it may be desirable in some instances to use both reflective strips 110 and coloured ribbons in coloured franzes or schusses.

In all embodiments, the schusses 120 and franzes 130 and strips 110, 112 can be manufactured out of many materials, including, not limited to polymeric materials, such as polypropylene, polyethylene, polyester, polyethylene terephthalate, nylon, polyvinyl chloride. Also, the thread, ribbon or strips comprising the schusses 120, franzes 130, and reflective strips 110, 112 can be monofilament or multifilament, woven, twisted or braided, and may alternatively be called string, tape, yarn or the like.

In many embodiments, reflective and/or coloured elements are provided as an indicator for approximately the last 100 linear metres of net, which is enough material for approximately 8 bales. As an alternative, the roll-end indicator may have additional features, such as colour or pattern-changing as the roll end approaches. For example, the first roll end indicator seen (e.g., 100-80 metres from the end of the net) can have a yellow tinge, which can change as netting continues to be dispensed to orange and/or red as the net end approaches. In such instance, the operator would be aware that the net end is approaching when he sees yellow, but would know that by the time red is seen, there is only enough netting material for at most one more bale. As such, material need not be wasted by discarding unused net. This general concept of the roll-end indicator can be applied to nonreflective indicators as well, where the colour changes as the roll end approaches. Further, this variation can also be used in combination with a continuous reflective marker throughout the length of the net.

When wound on a spool or core, the roll end is the portion of net closest to the core. Accordingly, during manufacture, this section can be prepared first and wound onto the core, with the remainder of the netting material being manufactured in a conventional manner and wound on the core over the reflective portions.

When a reflective material is used as the mark, the reflective material has a coefficient of retroreflection (R_{A}), in the range of 30 to 700, for example 250. Marker tensile strengths on the order of 140-800 grams are contemplated. Similarly, materials used as a marker can have elongation between 0% and 200%, for example 10%, 20%, 30%, 40%, 50%, 60% etc. In addition, the marker material can have the same or different elongation properties that those of the franze or schuss ribbon that it replaces or supplements. A reflective material can include polymeric material that is made reflective by the addition of refractive particles, such as very small beads formed from glass or polymeric materials.

Further, the reflective material may have any suitable width such as between 1/69 inch and 10 inches, for example 1/69 inch, 1/32 inch or 1/23 inch.

As discussed herein netting material, can incorporate the reflective indicator throughout the entire length of the netting material so that any bale wrapped with the material is visible at night.

In other embodiments the subject netting material incorporates a first reflective indicator throughout the entire length of the netting material, and a second reflective indicator at the end of the netting material. In this case, the first reflective indicator allows any bale wrapped with the material to be visible at night, while the second indicator allows an operator to be alerted to an approaching end of the netting material. In such a case, the first and second reflective indicators would necessarily be distinguishable. Such distinction can be achieved by providing a separate or different pattern and/or colour for each indicator, or even simply placing the reflective indicators at different positions on the net. For example, a first indicator can be arranged in the middle of the net, with the second indicator being arranged toward one edge of the net, or vice versa. Of course, this alternative embodiment may also include coloured netting elements to alert an operator to an approaching roll end in daylight.

A further alternate means of distinguishing between a continuous (throughout the entire net length) indicator and a roll end indicator incorporates a single strand of indicator material. Such indicator itself can vary in colour or pattern throughout its length to indicate whether the end of netting material is approaching. For example, the indicator material may be solid for a majority of its length, but in the region where roll-end indication is desired, the reflectivity of the reflective strand can be varied. That is, what is otherwise a "solid" reflective strand can become an intermittently reflective strand. This can be achieved by obscuring intermittent portions of the reflective strand with opaque paint or the like.

While netting may be initially manufactured to incorporate a reflective indicator, such indicator may be incorporated into a roll that has already been manufactured. If an existing roll of netting is to be modified, it is possible to incorporate a reflective marker into the net, and wind the net onto another spool or core.

While the above embodiments include a reflective and/or coloured roll-end indicator that is integrated into the netting material in a substantially longitudinal direction, it is possible to include markers that are arranged in a substantially transverse manner. For example, rather than incorporating a zigzag reflective schuss, segments of reflective strips along the width of the netting can be inserted intermittently along the length of the netting, perpendicular to a longitudinal axis of the netting material. This alternative means of reflective indication can communicate information to an operator in a variety of manners. For example, different colour reflective materials can be used as the roll end approaches and/or the frequency of transverse reflective indicators can be increased, placed adjacent to each other in pairs, threes, and so on.

A further variation of the subject reflective and/or coloured indicators provides different coloured and/or patterned indicators for different crops. As a result, if stored in a dark barn or in a field, a baled crop can be quickly and easily identified.

It is to be understood that the term "reflective" has been used above to describe the type of marker preferred for the present invention, that a luminescent marker may be substituted in its place. Such luminescent markers may include so-called"glow in the dark" materials. Further materials having a fluorescent colour that is easily viewable in poor lighting conditions may also be used.

It is to be understood that other embodiments utilizing the subject reflective markers and falling within the scope of the appended claims are possible.

## Claims

1. A netting comprising knitted longitudinal franze ribbons (130) and interconnecting transverse schuss ribbons (120) that zigzag laterally between the adjacent longitudinal franze ribbons (130) and form a series of triangular openings (140,145), **characterised by** at least one reflective or luminescent indicator strip (110,112) that is threaded or knitted into the netting so as to extend over at least a part of the length of the netting adjacent to at least one of the longitudinal franze ribbons (130), at least one of the interconnecting zigzag schuss ribbons (120), or both.

2. The netting of claim 1, wherein the at least one reflective indicator strip (110) extends from an end of the netting along a longitudinal direction of the netting.

3. The netting of claim 1 or claim 2, wherein a plurality of said openings (140,145) are formed from the longitudinal franze ribbons (130) and the interconnecting transverse schuss ribbons (120).

4. The netting of claim 3, wherein the at least one reflective indicator strip (110,112) is arranged adjacent to one of the longitudinal franze ribbons (130) and extends through the opening (140,145).

5. The netting of claim 3, wherein the at least one reflective indicator strip (110,112) is arranged adjacent to one of the transverse schuss ribbons (120) and extends through the openings (140,145).

6. The netting of any preceding claim, wherein the at least one reflective indicator strip (110,112) extends over the entire length of the netting.

7. The netting of any of claims 1 to 5, wherein the at least one indicator strip (110,112) extends over a part of the netting length.

8. The netting of any preceding claim, wherein the at least one reflective indicator strip (110,112) is located continuously between an end of the netting and a point spaced a predetermined distance from the end, thereby acting as a visual signal to a user that an end of the netting is approaching.

9. A netting according to any preceding claim, wherein the reflective indicator strip (110,112) has first and second faces and comprises reflective material on both faces.

10. The netting according to any of claims 1 to 8, wherein the reflective indicator strip (110,112) has first and second faces and comprises reflective material only on one face.

11. The netting according to any preceding claim, wherein the reflective indicator strip (110,112) comprises a polymeric material.

12. The netting according to any preceding claim, wherein a substrate of the reflective indicator strip (110,112) is made reflective by the addition of refractive particles.

13. The netting according to claim 3, wherein the refractive particles are very small glass beads.

14. The netting according to any preceding claim, wherein the at least one reflective indicator strip (110,112) includes first and second reflective indicator strips arranged on the netting material in different patterns to facilitate distinction between the indicator strips.

15. The netting material of any preceding claim, wherein the at least one reflective indicator strip (110,112) includes first and second reflective indicator strips arranged on the netting in different locations relative to a centre line of the netting material to facilitate distinction between the indicator strips (110,112).

16. The netting according to any preceding claim, wherein the at least one indicator strip (110,112) includes first and second reflective indicator strips of different colours to facilitate distinction between the indicator strips (110,112).

17. The netting according to any preceding claim, wherein said at least one reflective indicator strip (110,112) has a retroreflective value of at least 30, said reflective indicator strip (110,112) identifying at least one of an approaching end of the knitted netting and a boundary of the knitted netting.

18. A netting according to any preceding claim formed into a roll.

19. A round bale wrapped about its circumference with the netting of any one of claims 1-17.

20. A method of wrapping a bale of agricultural produce in a baler comprising supplying a baling machine with a roll of knitted netting according to claim 1, wherein said at least one reflective indicator strip (110,112) extends longitudinally continuously from one end of the netting material to a point located at a predetermined distance from said one end, the at least one reflective indicator strip (110,112) alerting a user that an end of the netting material is approaching and, wrapping said bale in said netting using said baling machine.

21. A method of providing a reflective netting comprising:
(a) providing a knitted netting having longitudinal franze ribbons (130) and inteconnecting transverse schuss ribbons (120) that
zigzag laterally between adjacent longitudinal franze ribbons (130) and form a series of triangular openings (140,145); and
(b) threading or knitting at least one reflective or luminescent indicator strip (110,112) into the netting so as to extend over at least a part of the length of the netting adjacent to at least one of
the longitudinal franze ribbons (130) and/or the interconnecting zigzag schuss ribbons (120).

22. The method of claim 21, wherein the method includes the step of threading at least one reflective indicator strip (110,112)through the series of triangular openings along at least a portion of said netting length.

23. The method of claim 22, wherein the method includes the step of threading at least one reflective indicator strip (110,112) through loops (220) in the longitudinal franze ribbons (130) along at least a portion of said netting length.

24. The method of claim 23, wherein the at least a portion of the netting length is the entire length of the netting.

## Patentansprüche

1. Netzgeflecht, mit gestrickten Franze-Bändern (130) in Längsrichtung und verbindenden Schuss-Bändern (120) in Querrichtung, die zwischen benachbarten Franze-Bändern (130) im Zickzack quer verlaufen und eine Reihe von dreieckförmigen Öffnungen (140, 145) ausbilden, **dadurch gekennzeichnet, dass** zumindest ein reflektierender oder lumineszierender Markierungsstreifen (110, 112) in das Netzgeflecht eingefädelt oder eingestrickt ist, so dass er sich zumindest über einen Teil der Länge des Netzgeflechts erstreckt, benachbart zu zumindest einem der Franze-Bänder (130) in Längsrichtung oder benachbart zu zumindest einem der Zickzack-Schuss-Bänder (120) oder zu beiden.

2. Netzgeflecht nach Anspruch 1, wobei sich der zumindest eine reflektierende Markierungsstreifen (110) von einem Ende des Netzgeflechtes entlang der Längsrichtung des Netzgeflechtes erstreckt.

3. Netzgeflecht nach Anspruch 1 oder 2, wobei eine Mehrzahl von Öffnungen (140, 145) aus den Franze-Bändern (130) in Längsrichtung und den verbindenden Schuss-Bändern (120) in Querrichtung ausgebildet ist.

4. Netzgeflecht nach Anspruch 3, wobei der zumindest eine reflektierende Markierungsstreifen (110, 112) benachbart zu einem der Franze-Bänder (130) in Längsrichtung angeordnet ist und sich durch die Öffnung (140 ,145) erstreckt.

5. Netzgeflecht nach Anspruch 3, wobei der zumindest eine reflektierende Markierungsstreifen (110, 112) benachbart zu einem der Schuss-Bänder (120) in Querrichtung angeordnet ist und sich durch die Öffnung (140 ,145) erstreckt.

6. Netzgeflecht nach irgend einem der vorherigen Ansprüche, wobei sich der zumindest eine reflektierende Markierungsstreifen (110, 112) über die gesamte Länge des Netzgeflechts erstreckt.

7. Netzgeflecht nach irgend einem der Ansprüche 1 bis 5, wobei sich der zumindest eine Markierungsstreifen (110, 112) über einen Teil der Länge des Netzgeflechts erstreckt.

8. Netzgeflecht nach irgend einem der vorherigen Ansprüche, wobei der zumindest eine reflektierende Markierungsstreifen (110, 112) kontinuierlich zwischen einem Ende des Netzgeflechts und einem Punkt angeordnet ist, der eine vorbestimmte Distanz von dem Ende beabstandet ist, wodurch er als visuelles Signal für eine Nutzer wirkt, dass das Ende des Netzgeflechts naht.

9. Netzgeflecht nach irgend einem der vorherigen Ansprüche, wobei der reflektierende Markierungsstreifen (110, 112) erste und zweite Oberflächen hat und reflektierendes Material an beiden Oberflächen vorgesehen ist.

10. Netzgeflecht nach irgend einem der Ansprüche 1 bis 8, wobei der reflektierende Markierungsstreifen (110, 112) erste und zweite Oberflächen hat und reflektierendes Material an nur einer Oberfläche vorgesehen ist.

11. Netzgeflecht nach irgend einem der vorherigen Ansprüche, wobei der reflektierende Markierungsstreifen (110, 112) ein polymeres Material umfasst.

12. Netzgeflecht nach irgend einem der vorherigen Ansprüche, wobei ein Substrat des reflektierenden Markierungsstreifens (110, 112) mittels der Anreicherung mit refraktiven Partikeln reflektierend gemacht ist.

13. Netzgeflecht nach Anspruch 12, wobei die refraktiven Partikel sehr kleine Glasperlen sind.

14. Netzgeflecht nach irgend einem der vorherigen Ansprüche, wobei der zumindest eine reflektierende Markierungsstreifen (110, 112) erste und zweite reflektierende Markierungsstreifen umfasst, die an dem Netzgeflechtmaterial in unterschiedlichen Mustern angeordnet sind, um die Unterscheidung zwischen den Markierungsstreifen zu erleichtern.

15. Netzgeflecht nach irgend einem der vorherigen Ansprüche, wobei der zumindest eine reflektierende Markierungsstreifen (110, 112) erste und zweite reflektierende Markierungsstreifen umfasst, die an dem Netzgeflechtmaterial an unterschiedlichen Positionen relativ zu einer Mittenlinie des Netzgeflechtes angeordnet sind, um die Unterscheidung zwischen den Markierungsstreifen (110, 112) zu erleichtern.

16. Netzgeflecht nach irgend einem der vorherigen Ansprüche, wobei der zumindest eine reflektierende Markierungsstreifen (110, 112) erste und zweite reflektierende Markierungsstreifen mit unterschiedlicher Farbe umfasst, um die Unterscheidung zwischen den Markierungsstreifen (110, 112) zu erleichtern.

17. Netzgeflecht nach irgend einem der vorherigen Ansprüche, wobei der zumindest eine reflektierende Markierungsstreifen (110, 112) einen Retroreflexionswert von zumindest 30 hat, und wobei der reflektierende Markierungsstreifen (110, 112) zumindest das nahe Ende des geflochtenen Netzes und/oder eine Umrandung des geflochtenen Netzes identifiziert.

18. Netzgeflecht nach irgend einem der vorherigen Ansprüche, wobei das Netzgeflecht als Rolle ausgebildet ist.

19. Rundes Bündel, welches am Umfang mit dem Netzgeflecht nach irgend einem der Ansprüche 1 bis 17 umwickelt ist.

20. Verfahren zum Umwickeln eines Bündels aus einem landwirtschaftlichen Produkt in einer Ballenpresse, mit Zufuhr einer Rolle des gewobenen Netzgeflechts nach Anspruch 1 zu einer Ballenpresse, wobei sich der zumindest eine reflektierende Markierungsstreifen (110, 112) in Längsrichtung kontinuierlich von einem Ende des Netzgeflechtmaterials bis zu einem Punkt erstreckt, der um einen vorbestimmten Abstand von dem Ende beabstandet ist, wobei der zumindest eine reflektierende Markierungsstreifen (110, 112) den Benutzer alarmiert, dass ein Ende des Netzmaterials sich nähert, und wobei das Bündel in das Netzgeflecht eingewickelt wird, indem die Ballenpresse verwendet wird.

21. Verfahren zum Vorsehen eines reflektierenden Netzgeflechtes, mit:
(a) Vorsehen eines geflochtenen Netzgeflechts, welches Längs-Franze-Bänder (130) und verbindende Quer-Schuss-Bänder (120) hat, die zickzack quer zwischen benachbarten Längs-Franze-Bänder (130) verlaufen und eine Reihe von dreieckigen Öffnungen (140, 145) ausbilden; und
(b) Einfädeln oder Einstricken von zumindest einem reflektierenden oder lumineszierenden Markierungsstreifen (110, 112) in das Netzgeflecht, so dass dieser sich zumindest über einen Teil der Länge des Netzgeflechtes erstreckt, benachbart zu zumindest einem der Längs-Franze-Bänder (130) und/oder den verbindenden zickzack Schuss-Bändern (120).

22. Verfahren nach Anspruch 21, wobei das Verfahren den Schritt des Einwebens von zumindest einem reflektierenden Markierungsstreifen (110, 112) umfasst, nämlich durch die Reihe von dreieckigen Öffnungen entlang zumindest eines Teils der Länge des Netzgeflechts.

23. Verfahren nach Anspruch 22, wobei das Verfahren den Schritt des Einwebens von zumindest einem reflektierenden Markierungsstreifen (110, 112) durch Schlaufen (220) in den Längs-Franze-Bändern (130) umfasst, nämlich entlang zumindest eines Teils der Länge des Netzgeflechts.

24. Verfahren nach Anspruch 23, wobei der zumindest eine Teil der Länge des Netzgeflechtes die gesamte Länge des Netzgeflechts ist.

## Revendications

1. Filet comprenant des rubans « franze » longitudinaux (130) et des rubans « schuss » transversaux (120) d'interconnexion qui zigzaguent latéralement entre les rubans « franze » longitudinaux (130) adjacents et forment une série d'ouvertures triangulaires (140, 145) tricotés, **caractérisé par** au moins une bande d'indication réfléchissante ou luminescente (110, 112) qui est enfilée ou tricotée dans le filet de manière à s'étendre sur au moins une partie de la longueur du filet adjacente à au moins l'un des rubans « franze » longitudinaux (130), au moins l'un des rubans « schuss » (120) en zigzag d'interconnexion, ou les deux.

2. Filet selon la revendication 1, dans lequel ladite au moins une bande d'indication réfléchissante (110) s'étend à partir d'une extrémité du filet le long d'une direction longitudinale du filet.

3. Filet selon la revendication 1 ou la revendication 2, dans lequel une pluralité desdites ouvertures (140, 145) sont formées à partir des rubans « franze » longitudinaux (130) et des rubans « schuss » transversaux (120) d'interconnexion.

4. Filet selon la revendication 3, dans lequel ladite au moins une bande d'indication réfléchissante (110, 112) est agencée adjacente à l'un des rubans « franze » longitudinaux (130) et s'étend à travers les ouvertures (140, 145).

5. Filet selon la revendication 3, dans lequel ladite au moins une bande d'indication réfléchissante (110, 112) est agencée adjacente à l'un des rubans « schuss » transversaux (120) et s'étend à travers les ouvertures (140, 145).

6. Filet selon l'une quelconque des revendications précédentes, dans lequel ladite au moins une bande d'indication réfléchissante (110, 112) s'étend sur la longueur entière du filet.

7. Filet selon l'une quelconque des revendications 1 à 5, dans lequel ladite au moins une bande d'indication (110, 112) s'étend sur une partie de la longueur du filet.

8. Filet selon l'une quelconque des revendications précédentes, dans lequel ladite au moins une bande d'indication réfléchissante (110, 112) est située en continu entre une extrémité du filet et un point espacé d'une distance prédéterminée de l'extrémité, agissant de ce fait en tant que signal visuel pour un utilisateur du fait qu'une extrémité du filet est proche.

9. Filet selon l'une quelconque des revendications précédentes, dans lequel la bande d'indication réfléchissante (110, 112) comporte des première et deuxième faces et comprend un matériau réfléchissant sur les deux faces.

10. Filet selon l'une quelconque des revendications 1 à 8, dans lequel la bande d'indication réfléchissante (110, 112) comporte des première et deuxième faces et comprend un matériau réfléchissant sur une seule face.

11. Filet selon l'une quelconque des revendications précédentes, dans lequel la bande d'indication réfléchissante (110, 112) comprend un matériau polymérique.

12. Filet selon l'une quelconque des revendications précédentes, dans lequel un substrat de la bande d'indication réfléchissante (110, 112) est rendu réfléchissant par l'ajout de particules réfringentes.

13. Filet selon la revendication 3, dans lequel les particules réfringentes sont de très petites perles de verre.

14. Filet selon l'une quelconque des revendications précédentes, dans lequel ladite au moins une bande d'indication réfléchissante (110, 112) comprend des première et deuxième bandes d'indication réfléchissantes agencées sur le matériau de filet en différents motifs pour faciliter une distinction entre les bandes d'indication.

15. Matériau de filet selon l'une quelconque des revendications précédentes, dans lequel ladite au moins une bande d'indication réfléchissante (110, 112) comprend des première et deuxième bandes d'indication réfléchissantes agencées sur le filet à différents emplacements par rapport à une ligne centrale du matériau de filet pour faciliter une distinction entre les bandes d'indication (110, 112).

16. Filet selon l'une quelconque des revendications précédentes, dans lequel ladite au moins une bande d'indication (110, 112) comprend des première et deuxième bandes d'indication réfléchissantes de différentes couleurs pour faciliter une distinction entre les bandes d'indication (110, 112).

17. Filet selon l'une quelconque des revendications précédentes, dans lequel ladite au moins une bande d'indication réfléchissante (110, 112) a une valeur de rétroréflexion d'au moins 30, ladite bande d'indication réfléchissante (110, 112) identifiant au moins l'une d'une extrémité proche du filet tricoté et d'une bordure du filet tricoté.

18. Filet selon l'une quelconque des revendications précédentes formé en un rouleau.

19. Balle ronde sur la circonférence de laquelle le filet selon l'une quelconque des revendications 1 à 17 est enroulé.

20. Procédé d'emballage d'une balle de produit agricole dans une presse à balles comprenant la fourniture à une emballeuse d'un rouleau de filet tricoté selon la revendication 1, dans lequel ladite au moins une bande d'indication réfléchissante (110, 112) s'étend longitudinalement en continu d'une extrémité du matériau de filet jusqu'à un point situé à une distance prédéterminée de ladite une extrémité, ladite au moins une bande d'indication réfléchissante (110, 112) avertissant un utilisateur qu'une extrémité du matériau de filet est proche et, l'emballage de ladite bale avec ledit filet en utilisant ladite emballeuse.

21. Procédé de réalisation d'un filet réfléchissant comprenant les étapes consistant à :
(a) réaliser un filet tricoté comportant des rubans « franze » longitudinaux (130) et des rubans « schuss » transversaux (120) d'interconnexion qui zigzaguent latéralement entre des rubans « franze » longitudinaux (130) adjacents et forment une série d'ouvertures triangulaires (140, 145) ; et
(b) enfiler ou tricoter au moins une bande d'indication réfléchissante ou luminescente (110, 112) dans le filet de manière à ce qu'elle s'étende sur au moins une partie de la longueur du filet adjacente à au moins l'un des rubans « franze » longitudinaux (130) et/ou des rubans « schuss » (120) en zigzag d'interconnexion.

22. Procédé selon la revendication 21, dans lequel le procédé comprend l'étape consistant à enfiler au moins une bande d'indication réfléchissante (110, 112) à travers la série d'ouvertures triangulaires le long d'au moins une partie de ladite longueur du filet.

23. Procédé selon la revendication 22, dans lequel le procédé comprend l'étape consistant à enfiler au moins une bande d'indication réfléchissante (110, 112) à travers des boucles (220) dans les rubans « franze » longitudinaux (130) le long d'au moins une partie de ladite longueur du filet.

24. Procédé selon la revendication 23, dans lequel ladite au moins une partie de la longueur du filet est la longueur entière du filet.
